# EUROPEAN PATENT APPLICATION

(11) **EP 4 819 748 A1**
(43) Date of publication of application: **07.10.2026**
(21) Application number: 24899286.9
(22) Date of filing: 29.07.2024
(51) Int. Cl.: H04W 74/08

(54) **SIGNAL DETECTION METHOD, SIGNAL SENDING METHOD, AND APPARATUS AND STORAGE MEDIUM**

(30) Priority: 04.12.2023 CN 202311648796
(71) Applicant: ZTE Corporation, Shenzhen, Guangdong 518057 (CN)
(72) Inventor: BIAN, Luanjian, Shenzhen, Guangdong 518057 (CN); DAI, Bo, Shenzhen, Guangdong 518057 (CN); HU, Youjun, Shenzhen, Guangdong 518057 (CN); YANG, Weiwei, Shenzhen, Guangdong 518057 (CN); LIU, Kun, Shenzhen, Guangdong 518057 (CN)
(74) Representative: Ziebig Hengelhaupt Intellectual Property Attorneys Patentanwaltskanzlei PartGmbB
(86) International application number: PCT/CN2024/108217
(87) International publication number: WO 2025/118636

(57) **Abstract**

Provided are a signal detection method, a signal sending method, and an apparatus and a storage medium. The signal detection method comprises: on the basis of a preamble sequence set and/or a sub-channel set, detecting a first access signal within a first slot range, wherein the first access signal comprises a first preamble sequence and first data information.

## Description

The present disclosure claims priority to Chinese Patent Application No. 202311648796.7 filed on December 4, 2023, the entire contents of which are incorporated herein by reference.

### TECHNICAL FIELD

The present disclosure relates to the technical field of communications, and in particular, to a signal detection method, a signal sending method, an apparatus, and a storage medium.

### BACKGROUND

In passive Internet of Things communication technology, for processes such as inventorying, identification, and access of terminal devices, an anti-collision algorithm based on a random time slot is adopted to avoid time conflict between access signals sent from multiple terminal devices. In the above process, a terminal randomly selects a time slot within a time slot range to send an access signal, and different terminal devices randomly select different time slots, so as to avoid conflict when the terminals send the access signals.

### SUMMARY

In a first aspect, the embodiments of the present disclosure provide a signal detection method, applied to a first node. The signal detection method includes:
detecting, based on a preamble sequence set and/or a subchannel set, a first access signal within a first time slot range, where the first access signal includes a first preamble sequence and first data information.

In a second aspect, the embodiments of the present disclosure provide a signal sending method, applied to a second node. The signal sending method includes:
sending a first access signal on a time slot within a first time slot range, where the first access signal includes a first preamble sequence and first data information; and the first access signal satisfies at least one condition that:
the first preamble sequence in the first access signal is a preamble sequence in a preamble sequence set; or
a subchannel for transmitting the first access signal is a subchannel in a subchannel set.

In a third aspect, the embodiments of the present disclosure provide a communication apparatus. The communication apparatus includes: a processing module;
the processing module, configured to detect, based on a preamble sequence set and/or a subchannel set, a first access signal within a first time slot range, where the first access signal includes a first preamble sequence and first data information.

In a fourth aspect, the embodiments of the present disclosure provide another communication apparatus. The communication apparatus includes: a communication module;
the communication module, configured to send a first access signal on a time slot within a first time slot range, where the first access signal includes a first preamble sequence and first data information; and the first access signal satisfies at least one condition that:
the first preamble sequence in the first access signal is a preamble sequence in a preamble sequence set;
a subchannel for transmitting the first access signal is a subchannel in a subchannel set.

In a fifth aspect, the embodiments of the present disclosure provide a communication apparatus, including a processor, where the processor, upon executing a computer program, implements the signal detection method according to the first aspect, or implements the signal sending method according to the second aspect.

In a sixth aspect, the embodiments of the present disclosure provide a computer-readable storage medium, where the computer-readable storage medium includes computer instructions; and in response that the computer instructions are executed, the signal detection method according to the first aspect is implemented, or the signal sending method according to the second aspect is implemented.

### BRIEF DESCRIPTION OF THE DRAWINGS

In order to more clearly illustrate the technical solutions in the present disclosure, the following briefly introduces the accompanying drawings required for describing some embodiments of the present disclosure. Obviously, the accompanying drawings in the following description is merely accompanying drawings of some embodiments of the present disclosure, and a person of ordinary skill in the art may still derive other drawings from these accompanying drawings.
FIG. 1 is a schematic architectural diagram of a communication system according to some embodiments.
FIG. 2 is a schematic flowchart of a signal detection method according to some embodiments.
FIG. 3 is a schematic flowchart of another signal detection method according to some embodiments.
FIG. 4 is a schematic flowchart of yet another signal detection method according to some embodiments.
FIG. 5 is a schematic flowchart of a signal sending method according to some embodiments.
FIG. 6 is a schematic flowchart of another signal sending method according to some embodiments.
FIG. 7 is a schematic flowchart of yet another signal sending method according to some embodiments.
FIG. 8 is a schematic structural diagram of a communication apparatus according to some embodiments.
FIG. 9 is a schematic structural diagram of another communication apparatus according to some embodiments.
FIG. 10 is a schematic structural diagram of yet another communication apparatus according to some embodiments.

### DETAILED DESCRIPTION

The technical solutions in the embodiments of the present disclosure will be clearly and completely described below in conjunction with the accompanying drawings in the embodiments of the present disclosure. Apparently, the described embodiments are merely a part of the embodiments of the present disclosure, rather than all of the embodiments. Based on the embodiments in the present disclosure, all other embodiments obtained by a person of ordinary skill in the art without making creative efforts fall within the protection scope of the present disclosure.

In the description of the present disclosure, unless otherwise specified, "/" means "or", for example, A/B may represent A or B. "And/or" herein is merely an association relationship describing associated objects, indicating that three relationships may exist, for example, A and/or B may represent: only A, only B, and both A and B. In addition, "at least one" means one or more, and "a plurality of/multiple" means two or more. Expressions such as "first", "second" do not limit the quantity and execution order, and expressions such as "first", "second" also do not necessarily limit the defined objects to be different.

It should be noted that in the present disclosure, expressions such as "exemplarily" or "for example" are used to illustrate examples, instances, or descriptions. Any embodiment or design scheme described as "exemplarily" or "for example" in the present disclosure should not be interpreted as being more preferred or more advantageous than other embodiments or design schemes. Precisely, the usage of expressions such as "exemplarily" or "for example" is intended to present related concepts in a detailed manner.

Currently, the passive Internet of Things has received extensive attention. Passive terminals in the passive Internet of Things have advantages such as requiring no external power supply, strong adaptability, high reliability, high security, low cost, simple installation, and good maintainability, and thus are widely used in many fields. In passive Internet of Things communication technology, a random time slot mode is adopted to avoid conflict when terminals send access signals. However, in the random time slot mode, time slots within a time slot range are limited. If the number of terminals exceeds the number of selectable time slots within the time slot range, there may still be a situation where multiple terminal devices select one time slot and send access signals on one time slot.

Based on this, the embodiments of the present disclosure provides a signal detection method and a signal sending method. When a second node sends a first access signal, a time slot within a first time slot range may be selected as the time slot for sending the first access signal, and in addition, a preamble sequence in a preamble sequence set may be selected as the preamble sequence of the first access signal and/or a subchannel in a subchannel set may be selected as the subchannel for transmitting the first access signal, thereby reducing the collision probability of the first access signals of multiple second nodes in multiple aspects such as time domain, frequency domain, and code domain, so as to improve the access efficiency of the second nodes.

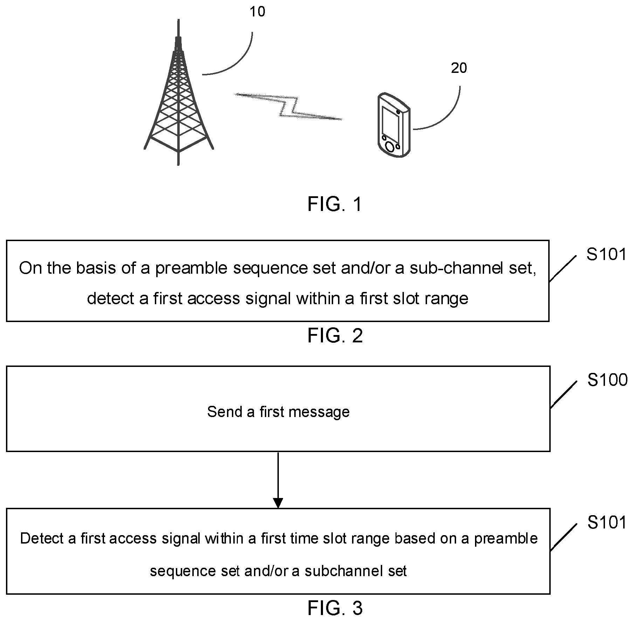

The signal detection method and the signal sending method provided in the present disclosure may be applied to a communication system as shown in FIG. 1. FIG. 1 shows a schematic architectural diagram of a communication system provided by the embodiments of the present disclosure. As shown in FIG. 1, the communication system includes a first node 10 and a second node 20.

In a wireless communication scenario, the first node 10 and the second node 20 communicate via a wireless channel. For another example, the first node 10 is a terminal, the second node 20 is a wireless router, and the wireless router and the terminal communicate via a wireless channel. For another example, the first node 10 is a first base station, the second node 20 is a second base station, and the first base station and the second base station communicate via a wireless channel. For another example, the first node 10 is a first terminal, the second node 20 is a second terminal, and the first terminal and the second terminal communicate via a wireless channel. For another example, the first node 10 is a repeater, the second node 20 is a base station, and the base station and the repeater communicate via a wireless channel. For another example, the first node 10 is a terminal, the second node 20 is a repeater, and the repeater and the terminal communicate via a wireless channel. For another example, the first node 10 is a first repeater, the second node 20 is a second repeater, and the first repeater and the second repeater communicate via a wireless channel. For another example, the first node 10 is a base station, the second node 20 is a satellite, and the satellite and the base station communicate via a wireless channel. For another example, the first node 10 is a satellite, the second node 20 is a base station, and the base station and the satellite communicate via a wireless channel. For another example, the first node 10 is a satellite, the second node 20 is a terminal, and the terminal and the satellite communicate via a wireless channel. For another example, the first node 10 is a ground device, the second node 20 is an aircraft, and the aircraft and the ground device communicate via a wireless channel. For another example, the first node 10 is a first aircraft, the second node 20 is a second aircraft, and the first aircraft and the second aircraft communicate via a wireless channel.

In the embodiments of the present disclosure, the description is mainly made by taking an example where the first node 10 is a base station and the second node 20 is a terminal.

In some embodiments, the first node 10 is configured to provide wireless access services for multiple terminals. For example, one base station provides a service coverage area (which may also be referred to as a cell). A terminal entering this area may communicate with the base station through a wireless signal, so as to receive the wireless access service provided by the base station.

In some embodiments, the first node 10 may be a base station in long term evolution (LTE), a base station in long term evolution advanced (LTE-A) or an evolutional node B (evolutional node B, eNB or eNodeB), a base station device in a 5G network, or a base station in a future communication system, etc. The base station may include various network-side devices such as various macro base stations, micro base stations, home base stations, remote radio units, reconfigurable intelligent surfaces (RIS), routers, wireless fidelity (wireless fidelity, WIFI) devices.

In some embodiments, the second node 20 may be a device having a wireless transceiving function, and may be deployed on land (including indoor or outdoor, handheld, wearable, or vehicle-mounted); may also be deployed on water (such as ships, etc.); and may also be deployed in the air (such as aircraft, balloons, and satellites, etc.). The terminal may be a mobile phone, a tablet computer (Pad), a computer with a wireless transceiving function, a virtual reality (VR) terminal, an augmented reality (AR) terminal, a wireless terminal in industrial control, a wireless terminal in self driving, a wireless terminal in remote medical, a wireless terminal in smart grid, a wireless terminal in transportation safety, a wireless terminal in smart city, a wireless terminal in smart home, etc. The embodiments of the present disclosure do not limit the application scenarios. The terminal may sometimes also be referred to as a user, user equipment (UE), an access terminal, a UE unit, a UE station, a mobile station, a mobile platform, a remote station, a remote terminal, a mobile device, a UE terminal, a wireless communication device, a UE agent, or a UE apparatus, etc., which is not limited in the embodiments of the present disclosure.

It should be noted that FIG. 1 is merely an exemplary framework diagram, and the number of devices included in FIG. 1 and the names of the devices are not limited. In addition to the devices shown in FIG. 1, the communication system may also include other devices (such as a core network device).

The application scenarios of the embodiments of the present disclosure are not limited. The system architecture and service scenarios described in the embodiments of the present disclosure are for the purpose of more clearly illustrating the technical solutions of the embodiments of the present disclosure, and do not constitute a limitation on the technical solutions provided by the embodiments of the present disclosure. A person of ordinary skill in the art may know that with the evolution of network architectures and the emergence of new service scenarios, the technical solutions provided by the embodiments of the present disclosure are also applicable to similar technical problems.

FIG. 2 shows a schematic flowchart of a signal detection method provided by the present disclosure. As shown in FIG. 2, the signal detection method is applied to a first node, and includes the following steps:
S101: a first access signal is detected within a first time slot range based on a preamble sequence set and/or a subchannel set.

The first access signal includes a first preamble sequence and first data information, where the first preamble sequence is located before the first data information.

In some embodiments, the first preamble sequence is used for signal conflict identification and signal synchronization. Exemplarily, the preamble sequence in the present disclosure may be an m sequence, a random bit sequence, a sequence with equally distributed 0s and 1s, a ZC sequence, a sequence encoded for predefined information, a sequence jointly generated by multiple sequences, etc. A sequence jointly generated by multiple sequences may be a sequence jointly generated by a wash sequence and a Manchester code, a sequence jointly generated by a PN sequence and a wash sequence, a sequence jointly generated by a pseudo-random ZC sequence and a wash sequence, or a sequence jointly generated by a ZC sequence and a PN sequence.

The data information in the present disclosure may be a random bit sequence, for example, may be a sequence including 16 bits randomly generated by the second node; or the data information may also include a part of information in an identity ( ID) of the second node. Alternatively, the data information may also include other sequences or other information, which is not limited in the present disclosure.

In some embodiments, the preamble sequence of the first access signal is a preamble sequence in a preamble sequence set.

The preamble sequence set includes P preamble sequences, where P is a positive integer.

As an implementation, the preamble sequence set is predefined.

The preamble sequence set is determined according to a second node type.

Exemplarily, each second node type corresponds to a preamble sequence set, and the preamble sequence sets corresponding to different second node types may be the same or different. For example, the second node type include type A, type B, and type C. Second nodes whose second node type is type A and type B correspond to a preamble sequence set U1, and second nodes whose second node type is type C correspond to a preamble sequence set U2. A number of preamble sequences in the preamble sequence set U1 may be greater than, equal to, or less than a number of preamble sequences in the preamble sequence set U2. Alternatively, second nodes of type A, type B, and type C all correspond to the preamble sequence set U1.

In a case where each second node type corresponds to a preamble sequence set, the first node may determine the second node type according to the preamble sequence in the detected first access signal. For example, the second node type include type A, type B, and type C. Second nodes whose second node type is type A and type B correspond to the preamble sequence set U1, and second nodes whose second node type is type C correspond to the preamble sequence set U2. If the preamble sequence detected by the first node is a preamble sequence in the preamble sequence set U1, it is determined that the second node type is type A or type B; and if the preamble sequence detected by the first node is a preamble sequence in the preamble sequence set U1, it is determined that the second node type is type C.

In some embodiments, a length of the preamble sequence in the first access signal and the second node type also have a corresponding relationship. For example, the second node type include type A, type B, and type C. Second nodes whose second node type is type A and type B correspond to a first preamble sequence length, and second nodes whose second node type is type C correspond to a second preamble sequence length. The first node may determine the second node type according to the preamble sequence length in the detected first access signal. If the preamble sequence length detected by the first node is the first preamble sequence length, it is determined that the second node type is type A or type B; and if the preamble sequence length detected by the first node is the second preamble sequence length, it is determined that the second node type is type C. If the preamble sequence length detected by the first node is the first preamble sequence length, it is determined that the second node type is type A or type B; and if the preamble sequence length detected by the first node is the second preamble sequence length, it is determined that the second node type is type C.

As another implementation, the preamble sequence set is determined based on a configuration parameter of the preamble sequence set.

The configuration parameter of the preamble sequence includes at least one of: a cyclic shift value, a preamble sequence index, a number of preamble sequences, a preamble sequence length, a preamble sequence set index.

In some embodiments, in a case where the configuration parameter of the preamble sequence set indicates that the cyclic shift value is L, the preamble sequence set includes K preamble sequences with cyclic shift values from L to L+K-1 respectively.

L and K are both positive integers, where K is a number of preamble sequences contained in the preamble sequence set, and K is greater than or equal to 1. K may be a preset value, or may be set according to an actual application scenario, or may be determined according to other modes, which is not limited in the present disclosure.

Exemplarily, taking a K value of 5 and the configuration parameter of the preamble sequence set indicating that the cyclic shift value L is 2 as an example, in this case, the preamble sequence set includes 5 preamble sequences with cyclic shift values of 2, 3, 4, 5, and 6 respectively.

In some embodiments, in a case where the configuration parameter of the preamble sequence set indicates that the preamble sequence index is L, the preamble sequence set includes K preamble sequences with preamble sequence indices from L to L+K-1 respectively.

Exemplarily, taking a K value of 6 and the configuration parameter of the preamble sequence set indicating that the preamble sequence index L is 3 as an example, in this case, the preamble sequence set includes 6 preamble sequences with preamble sequence indices of 3, 4, 5, 6, 7, and 8 respectively.

In some embodiments, in a case where K is a preset value, the first node may determine the second node type according to the K value.

Exemplarily, the second node type include type A, type B, and type C. The K value corresponding to second nodes whose second node type is type A and type B is a first value, and the K value corresponding to second nodes whose second node type is type C is a second value, where the first value may be greater than or less than the second value. If the K value corresponding to the preamble sequence set corresponding to the preamble sequence of the first access signal detected by the first node is the second value, it is determined that the second node type is type C.

In some embodiments, in a case where the configuration parameter of the preamble sequence set indicates that the preamble sequence length is L, the preamble sequence set includes one or more preamble sequences with a number of data elements of L. The preamble sequence length is used to indicate the number of data elements included in one preamble sequence.

It should be noted that preamble sequences have high autocorrelation and low cross-correlation, that is, the preamble sequences have orthogonal or approximately orthogonal characteristics. A correlation value between two different preamble sequences is low, and a correlation value between two identical preamble sequences is high. Therefore, when the first node detects the first access signal based on the preamble sequence set, if a relatively high correlation value is detected, the corresponding preamble sequence may be directly determined according to the correlation value.

In some embodiments, as shown in FIG. 3, before the first node detects the first access signal within the first time slot range, the signal detection method at least further includes S100:
S100: a first message is sent.

The first message includes at least one of: a configuration parameter of the first time slot range, a configuration parameter of the preamble sequence set, a configuration parameter of the subchannel set, first indication information, second indication information, and third indication information;
where the first indication information is used to indicate a second node type; the second indication information is used to indicate an access signal type; and the third indication information is used to indicate an access mode.

Exemplarily, the configuration parameter of the first time slot range is used to determine the first time slot range. The configuration parameter indicates a Q value, and the first time slot range determined based on the configuration parameter is 0 to 2^{Q}-1, where Q is an integer, and Q is greater than or equal to 0. For example, in a case where the configuration parameter indicates that the Q value is 4, the first time slot range determined based on the configuration parameter is 0 to 15. After the second node receives the first message, the second node may determine, according to the configuration parameter 4 of the first time slot range in the first message, that the first time slot range is 0 to 15, and randomly select a time slot within the first time slot range to transmit the first access signal.

It should be noted that there are multiple time slots within the first time slot range, and a time slot is a duration unit. The durations of different time slots may be different. Exemplarily, the first node sends slot decrement information, where the slot decrement information is used to determine the start or end of a time slot. For example, the slot decrement information is used to indicate the end of a previous time slot or the start of a next time slot.

As yet another example, the configuration parameter of the preamble sequence set is used to determine the preamble sequence set, and a related description thereof may refer to the detailed description of the configuration parameter of the preamble sequence above, which will not be repeated herein.

As yet another example, the configuration parameter of the subchannel set is used to determine the subchannel set. For example, if the configuration parameter of the subchannel set indicates F subchannel indices, the subchannel set corresponding to the configuration parameter of the subchannel set is a set composed of subchannels whose subchannel indices are the above F subchannel indices. Alternatively, if the configuration parameter of the subchannel set indicates that the subchannel set includes F subchannels, the subchannel set includes subchannels 0 to F-1, where F is a positive integer. After the second node receives the first message, the second node may determine the subchannel set according to the configuration parameter of the subchannel set in the first message, and randomly select a subchannel in the subchannel set to transmit the first access signal.

It should be understood that a subchannel is a transmission frequency band, and a measurement unit of a frequency domain width of the subchannel may be a frequency domain unit such as a subcarrier, a physical resource block, or Hertz (Hz). Different subchannels have different frequency domain positions, and the frequency domain widths of different subchannels may be the same or different.

As yet another example, the first indication information is used to indicate a second node type. For example, the second node type include type A, type B, and type C. The first indication information indicates that a second node whose second node type is type A sends a first access signal. After a second node whose second node type is type A receives the first message, the second node determines, according to the first indication information in the first message, that second node itself needs to send a first access signal.

It should be noted that the first indication information is not only used to indicate the second node type, but the first node may also determine a preamble sequence set according to the second node type indicated in the first indication information, and detect the first access signal based on the preamble sequence set. As described in the above example, the second node type include type A, type B, and type C. Second nodes whose second node type is type A and type B correspond to the preamble sequence set U1, and second nodes whose second node type is type C correspond to the preamble sequence set U2. For example, the first indication information indicates that a second node whose second node type is type A sends a first access signal. The first node may determine, according to the second node type indicated by the first indication information, that the preamble sequence set corresponding to the second node type is U1, and then the first node may detect the first access signal based on the preamble sequence set U1.

As yet another example, the second indication information is used to indicate an access signal type. The access signal type include a backscatter signal and an independently generated signal. For example, the second indication information indicates that the first access signal sent from the second node is a backscatter signal. After the second node receives the first message, the second node determines, according to the second indication information, that the access signal type of the first access signal is the backscatter signal, and sends the first access signal whose access signal type is the backscatter signal.

It should be noted that different access signal types correspond to different preamble sequence sets. For example, the backscatter signal corresponds to the preamble sequence set U1, and the independently generated signal corresponds to the preamble sequence set U2. If the access signal type indicated by the second indication information is the backscatter signal, the first node may determine, according to the access signal type indicated by the second indication information, that the preamble sequence set corresponding to the access signal type is U1, and detect the first access signal based on the preamble sequence set U1.

As yet another example, the third indication information is used to indicate an access mode. The access mode include a first backscatter access mode, a second backscatter access mode, and an active communication access mode. For example, the first backscatter access mode includes periodically triggered backscatter access, and the second backscatter access mode includes aperiodically triggered backscatter access. Access modes supported by second nodes of different second node types may be the same or different. For example, second nodes of second node types A and B support the first backscatter access mode, and second nodes of second node type C support the second backscatter access mode and the active communication access mode. For another example, in a case where the access mode indicated by the third indication information is the first backscatter access mode, after second nodes of second node types A and B supporting the first backscatter access mode receive the first message, these second nodes determine, according to the third indication information in the first message, that these second nodes themselves need to send the first access signal in the first backscatter access mode.

It should be noted that different access modes correspond to different or identical second node types, so the second node type may be determined according to the access mode. Moreover, different second node types correspond to different preamble sequence sets, so the preamble sequence set may be determined according to the third indication information. For example, as described in the above example, the second node type include type A, type B, and type C. Second nodes whose second node types are type A and type B correspond to the preamble sequence set U1, and second nodes whose second node type is type C correspond to the preamble sequence set U2. Second nodes of types A and B support the first backscatter access mode, and second nodes of type C support the second backscatter access mode and the active communication access mode. Taking a case where the access mode indicated by the third indication information is the active communication access mode as an example, only second nodes of second node type C support the active communication access mode. Then, the first node determines, according to the active communication node mode indicated by the third indication information, that the preamble set corresponding to the access mode is U2, and detects the first access signal based on the preamble sequence set U2.

Thus, when the second node sends the first access signal, not only a time slot within the first time slot range may be selected as the time slot for sending the first access signal, but also a preamble sequence in the preamble sequence set may be selected as the preamble sequence of the first access signal and/or a subchannel in the subchannel set may be selected as the subchannel for transmitting the first access signal, thereby reducing the collision probability of the first access signals of multiple second nodes in multiple aspects such as time domain, frequency domain, and code domain, so as to improve the access efficiency of the second nodes.

In some embodiments, the first node detects the first access signal within the first time slot range based on the preamble sequence set and/or the subchannel set, and at least one of the following detection results occurs.
1. The first node detects a first access signal on a time slot within the first time slot range (i.e., detecting a preamble sequence of the first access signal), and correctly decodes data information of the first access signal.
   It should be noted that this detection result indicates that only one second node selects the time slot to send a first access signal.
2. The first node does not detect a first access signal on a time slot within the first time slot range (i.e., does not detect a preamble sequence of a first access signal).
   It should be noted that this detection result indicates that no second node selects the time slot to send a first access signal, and the time slot is an idle transmission resource.
3. The first node detects N first access signals on a time slot within the first time slot range (i.e., detecting preamble sequences of N first access signals), where N is a positive integer.

It should be understood that in some technologies, among the access signals sent from the second nodes, different preamble sequences are orthogonal or approximately orthogonal. Access signals sent from multiple second nodes use the same preamble sequence, or use preamble sequences that are orthogonal or approximately orthogonal to each other, so the first node can successfully detect the preamble sequences; while data information among different access signals is different, so the first node cannot correctly decode the data information in the first access signals. This also means that multiple access signals collide, and the first node needs to send access signals again, so that the second nodes can complete the access process.

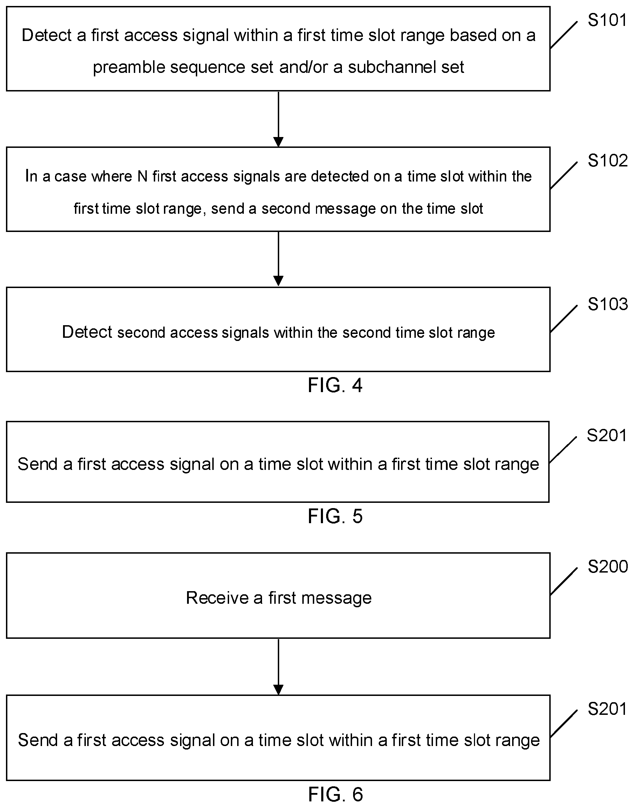

In some embodiments, in a case where N first access signals are detected on a time slot within the first time slot range, or in a case where N first access signals are detected on a time slot within the first time slot range and data information of the N first access signals is not correctly decoded, the first node sends a second message to trigger the second nodes that sent the first access signals on the time slot to send second access signals, and then the first node detects the second access signals. As shown in FIG. 4, the above process may be implemented as the following steps (S102 and S103).

S102: in a case where N first access signals are detected on a time slot within the first time slot range, a second message is sent on the time slot.

The second message includes at least one of: a configuration parameter of a second time slot range, fourth indication information, fifth indication information, and sixth indication information. The fourth indication information is used to indicate at least one first preamble sequence among the first preamble sequences respectively contained in the N first access signals; the fifth indication information is used to indicate at least one subchannel among subchannels respectively used by the N first access signals; the sixth indication information is used to indicate that the first node has detected the first preamble sequence; N is a positive integer.

Exemplarily, the configuration parameter of the second time slot range is used to indicate the second time slot range, so that the second nodes that sent the first access signals on the above time slot randomly select a time slot within the second time slot range to send second access signals.

As yet another example, the fourth indication information includes a first bitmap, and the first bitmap includes K indication bits. Each indication bit corresponds to a preamble sequence in the preamble sequence set, and a value of the indication bit is used to indicate whether the preamble sequence corresponding to the indication bit is the first preamble sequence indicated by the fourth indication information, where K is a number of preamble sequences contained in the preamble sequence set, and K is a positive integer. For example, the preamble sequence set includes K preamble sequences, and each of the K preamble sequences corresponds to an indication bit in the first bitmap. An indication bit with a value of 1 is used to indicate that the preamble sequence corresponding to the indication bit is the first preamble sequence indicated by the fourth indication information. Take, for example, that the preamble sequence set includes 15 sequences, which respectively correspond to the 15 indication bits in the first bitmap. If the first bitmap is 000 0000 0000 0001, it indicates that the preamble sequence indicated by the fourth indication information is the 1st preamble sequence in the preamble sequence set; if the first bitmap is 100 0000 0000 0001, it indicates that the preamble sequences indicated by the fourth indication information are the 1st preamble sequence and the 15th preamble sequence in the preamble sequence set; and if the first bitmap is 100 0000 0100 0010, it indicates that the preamble sequences indicated by the fourth indication information are the 2nd preamble sequence, the 7th preamble sequence, and the 15th preamble sequence in the preamble sequence set.

As yet another example, the fourth indication information includes at least one first indication field, and each first indication field is used to indicate one first preamble sequence. For example, the fourth indication information includes n first indication fields, where n is a positive integer, and n is less than or equal to N. The value of n is determined according to the fourth indication information, or n is a fixed value. For another example, n is a fixed value of 1, and then the fourth indication information is used to indicate one first preamble sequence among the first preamble sequences respectively contained in the N first access signals. For another example, the fourth indication information includes an instruction index, and the instruction index corresponds to a number n of first indication fields in the fourth indication information. For example, an n value corresponding to an instruction index I is a first value, and an n value corresponding to an instruction index J is a second value. In some other embodiments, the fourth indication information includes an n-value indication field and n preamble sequence indication fields, where the n-value indication field is located before the n preamble sequence indication fields, and the value of n is determined by the n value indication field.

It should be noted that each first access signal uses one first preamble sequence, and the N first access signals use M first preamble sequences, where M is less than or equal to N. That is, multiple access signals among the N first access signals use the same preamble sequence. The fourth indication information can indicate one first preamble sequence among the first preamble sequences respectively contained in the N first access signals, and the first node may indicate the M first preamble sequences respectively by sending M pieces of fourth indication information. Alternatively, the fourth indication information is used to indicate n preamble sequences among the first preamble sequences respectively contained in the N first access signals, where n is a positive integer, and n is less than or equal to M. The number of indicated first preamble sequences may be the same or different for different pieces of fourth indication information, and the first node may indicate the M first preamble sequences by sending k pieces of fourth indication information, where k is a positive integer, and k is less than M. Taking M being 5 and k being 2 as an example, the first node sends the fourth indication information twice. The fourth indication information sent at the 1st time indicates 3 preamble sequences among the 5 first preamble sequences, and the fourth indication information sent at the 2nd time indicates the remaining 2 preamble sequences among the 5 first preamble sequences. Alternatively, the fourth indication information can indicate all of the first preamble sequences among the first preamble sequences respectively contained in the N first access signals, and the first node only sends the fourth indication information once to indicate all of the first preamble sequences among the first preamble sequences respectively contained in the N first access signals.

As yet another example, the fifth indication information includes a second bitmap, and the second bitmap includes P indication bits. Each indication bit of the P indication bits corresponds to one subchannel in the subchannel set, and a value of the indication bit is used to indicate whether the subchannel corresponding to the indication bit is the subchannel indicated by the fifth indication information, where P is a number of subchannels included in the subchannel set, and P is a positive integer. For example, the subchannel set includes P subchannels, and each of the P subchannels corresponds to one indication bit in the second bitmap. An indication bit with a value of 1 is used to indicate that the subchannel corresponding to the indication bit is the subchannel indicated by the fifth indication information. Take, for example, that the subchannel set includes 8 subchannels, which respectively correspond to the 8 indication bits in the second bitmap. If the second bitmap is 0000 0001, it indicates that the subchannel indicated by the fifth indication information is the 1st subchannel in the subchannel set; and if the second bitmap is 0000 1001, it indicates that the subchannels indicated by the fifth indication information are the 1st subchannel and the 4th subchannel in the subchannel set.

As yet another example, the fifth indication information includes at least one second indication field, and each second indication field is used to indicate one subchannel. For example, a value of the second indication field corresponds to an index of the subchannel indicated by the fifth indication information. That is, when the value of the second indication field is 2, the subchannel indicated by the fifth indication information is the subchannel with an index of 2.

It should be noted that transmission of each first access signal occupies one subchannel, and transmission of the N first access signals occupies M subchannels, where M is less than or equal to N. That is, multiple access signals among the N first access signals use the same subchannel. The fifth indication information can indicate one subchannel among the subchannels respectively used by the N first access signals, and the first node may indicate the M subchannels respectively by sending M pieces of fifth indication information. Alternatively, the fifth indication information is used to indicate the first n subchannels among the subchannels respectively used by the N first access signals, where n is a positive integer, and n is less than or equal to M. A number of indicated subchannels may be the same or different for different pieces of fifth indication information. The first node may indicate the M subchannels by sending k pieces of fifth indication information, where k is a positive integer, and k is less than M. Taking M being 5 and k being 2 as an example, the first node sends the fifth indication information twice. The fifth indication information sent at the 1st time indicates 3 subchannels among the subchannels used by the 5 first access signals, and the fifth indication information sent at the 2nd time indicates the remaining 2 subchannels among the subchannels used by the 5 first access signals. Alternatively, the fifth indication information can indicate all of the subchannels among the subchannels respectively used by the N first access signals, and the first node only sends the fifth indication information once to indicate all of the subchannels among the subchannels respectively used by the N first access signals.

As yet another example, the sixth indication information is used to indicate that the first node has detected the first preamble sequence. For example, when the sixth indication information is 1, it indicates that the first node has detected the first preamble sequence, and in a case where the second nodes that sent the first access signals on the above time slot receive the sixth indication information, second access signals are sent.

Thus, in a case where the first node fails to successfully decode the data information of the first access signals due to time slot collision, the second message is sent to trigger the second nodes with time slot collision to send second access signals, so as to decode the second access signals again, thereby improving the access efficiency and success rate of the second nodes.

S103: second access signals are detected within the second time slot range.

A second access signal includes a second preamble sequence and second data information.

As an implementation, detecting the second access signals within the second time slot range may be implemented as the following step: detecting, based on the preamble sequence set or the at least one first preamble sequence indicated by the fourth indication information, the second access signals within the second time slot range.

Exemplarily, the first node may detect the second access signals within the second time slot range based on a fixed preamble sequence in the preamble sequence set. The first node may also detect the second access signals within the second time slot range based on each preamble sequence in the preamble sequence set. The first node may also detect the second access signals within the second time slot range based on any preamble sequence among the at least one first preamble sequence indicated by the fourth indication information and the preamble sequence set.

As another implementation, detecting the second access signals within the second time slot range may be implemented as the following step: detecting, based on the subchannel set or the at least one subchannel indicated by the fifth indication information, the second access signals within the second time slot range.

Exemplarily, the first node may detect the second access signals within the second time slot range based on a fixed subchannel in the subchannel set. The first node may also detect the second access signals within the second time slot range based on each subchannel in the subchannel set. The first node may also detect the second access signals within the second time slot range based on any subchannel among the at least one first subchannel indicated by the fourth indication information and the subchannel set.

Exemplarily, the second time slot range is determined based on the configuration parameter of the above second time slot range. For example, according to the configuration parameter of the second time slot range, it is determined that the maximum time slot value within the second time slot range is S-1, and then it is determined that the second time slot range is time slots 0 to S-1, where S is greater than or equal to 1. For another example, the second time slot range is a predefined fixed time slot range, such as time slot 0 to time slot 3. For another example, the second time slot range is the same as the above first time slot range.

As yet another example, the second preamble sequence is a fixed preamble sequence in the above preamble sequence set. For example, the second preamble sequence is the first preamble sequence in the above preamble sequence set, and the first node detects the second access signals based on the first preamble sequence in the preamble sequence set. Alternatively, the second preamble sequence is the first first preamble sequence indicated by the fourth indication information, and the first node detects the second access signals based on the first first preamble sequence indicated by the fourth indication information. In a case where the above fourth indication information indicates a single first preamble sequence, the second preamble sequence is the first preamble sequence in the fourth indication information.

Thus, when multiple second nodes send second access signals, only the same designated preamble sequence is used, which can reduce detection complexity when the first node detects the preamble sequences.

As yet another example, the second preamble sequence is a preamble sequence randomly selected from the preamble sequence set, and the first node detects the second access signals based on the preamble sequence set. Thus, the multiple second nodes randomly reselect a preamble sequence from the preamble sequence set, so that multiple preamble sequences in the preamble sequence set are selected and used. The first node may evaluate a number of second nodes according to a number of used preamble sequences in the preamble sequence set, which is beneficial for judging a number of second nodes experiencing collision, so as to effectively adjust the allocated transmission resources.

As yet another example, the second preamble sequence in the second access signal is the same as the first preamble sequence in the first access signal sent from the same second node, and the first node detects the second access signals based on the first preamble sequence indicated by the fourth indication information. Alternatively, the second access signals sent from the second nodes triggered by the second message adopt the same second preamble sequence.

As yet another example, the second message further includes indication information of the second preamble sequence, and the indication information is used to directly indicate the second preamble sequence. The second preamble sequence is the preamble sequence indicated by the indication information of the second preamble sequence carried in the second message. Alternatively, the second message further includes indication information of a preamble sequence set, and the indication information is used to indicate a preamble sequence set. The second preamble sequence is a preamble sequence in the preamble sequence set indicated by the indication information of the preamble sequence set carried in the second message. When the second node receives the second message, the second node determines the corresponding preamble sequence set is determined according to the indication information of the preamble sequence set carried in the second message, and randomly selects a preamble sequence in the preamble sequence set as the second preamble sequence.

As an implementation, detecting the second access signals within the second time slot range may be implemented as the following step: detecting, on the at least one subchannel indicated by the fifth indication information, the second access signals within the second time slot range; or, detecting, on a fixed subchannel in the subchannel set, the second access signals within the second time slot range ; or, detecting, on each subchannel in the subchannel set, the second access signals within the second time slot range.

As yet another example, the subchannel for transmitting a second access signal is a subchannel randomly selected from the subchannel set, and the first node detects the second access signals within the subchannel set. Alternatively, the subchannel for transmitting a second access signal is a fixed subchannel in the subchannel set. For example, the subchannel for transmitting a second access signal is the first subchannel in the subchannel set, and the first node detects the second access signals on the first subchannel within the subchannel set. Alternatively, the subchannel for transmitting a second access signal is the first subchannel indicated by the fifth indication information carried in the second message, and the first node detects the second access signals on the first subchannel indicated by the fifth indication information. Alternatively, the subchannel for transmitting a second access signal is the same as the subchannel for transmitting a first access signal by the same second node, and the first node detects the second access signals on the subchannel indicated by the fifth indication information. Alternatively, the second message further includes indication information of a subchannel, and the indication information is used to directly indicate a subchannel. The subchannel for transmitting a second access signal is the subchannel indicated by the indication information of the subchannel carried in the second message. Alternatively, the second message further includes indication information of a subchannel set, and the indication information of the first subchannel set is used to indicate a subchannel set. The subchannel for transmitting a second access signal is a subchannel in the subchannel set indicated by the indication information of the subchannel set carried in the second message. When the second node receives the second message, the second node determines the subchannel set according to the indication information of the subchannel set carried in the second message, and randomly selects a subchannel in the subchannel set as the subchannel for transmitting the second access signal.

In some embodiments, after receiving the first access signal or the second access signal, the first node sends access confirmation information.

The access confirmation information is used to characterize that the first node has received the first access signal or the second access signal. The access confirmation information the data information in the corresponding first access signal or second access signal, or a message (Message2). The Message2 includes basic information, network configuration information, etc., of the first node.

In some embodiments, after the first node sends the access confirmation information, the first node receives a physical uplink channel signal.

The physical uplink channel signal includes a third preamble sequence and physical uplink channel data, where the preamble sequence is located before the physical uplink channel data. The third preamble sequence is a fixed preamble sequence. Alternatively, the third preamble sequence is a preamble sequence selected by the second node from the preamble sequence set. Exemplarily, the preamble sequence set used by the third preamble sequence is different from the preamble sequence set used by the first preamble sequence or the second preamble sequence. Alternatively, the third preamble sequence is a preamble sequence determined based on a cell ID corresponding to the second node. Alternatively, the third preamble sequence is a preamble sequence directly indicated by the first node.

FIG. 5 shows a schematic flowchart of a signal sending method provided by the present disclosure. As shown in FIG. 5, the signal sending method is applied to a second node, and at least includes the following steps S201.

S201: a first access signal is sent on a time slot within a first time slot range.

The first access signal includes a first preamble sequence and first data information, and the first access signal satisfies at least one condition that: the first preamble sequence in the first access signal is a preamble sequence in a preamble sequence set; and a subchannel for transmitting the first access signal is a subchannel in a subchannel set.

As an implementation, the preamble sequence set is predefined.

The preamble sequence set is determined according to a second node type, and each second node type corresponds to one preamble sequence set.

As another implementation, the preamble sequence set is determined based on a configuration parameter of the preamble sequence set.

The configuration parameter of the preamble sequence includes at least one of: a cyclic shift value, a preamble sequence index, a number of preamble sequences, a preamble sequence length, or a preamble sequence set index.

In some embodiments, in a case where the configuration parameter of the preamble sequence set indicates that the cyclic shift value is L, the preamble sequence set includes K preamble sequences with cyclic shift values from L to L+K-1 respectively; or,

in a case where the configuration parameter of the preamble sequence set indicates that the preamble sequence index is L, the preamble sequence set includes K preamble sequences with preamble sequence indices from L to L+K-1 respectively; L and K are both positive integers, where K is the number of preamble sequences included in the preamble sequence set.

In some embodiments, before the second node sends the first access signal on a time slot within the first time slot range, as shown in FIG. 6, the signal sending method further at least includes the following step S200.

S200: a first message is received.

Receive a first message, where the first message includes at least one of: a configuration parameter of the first time slot range, a configuration parameter of the preamble sequence set, a configuration parameter of the subchannel set, first indication information, second indication information, and third indication information; the first indication information is used to indicate a second node type; the second indication information is used to indicate an access signal type; and the third indication information is used to indicate an access mode.

Exemplarily, after receiving the first message, the second node determines the first time slot range according to the configuration parameter of the first time slot range carried in the first message, and randomly selects a time slot within the first time slot range to send the first access signal.

As yet another example, after receiving the first message, the second node determines the preamble sequence set according to the configuration parameter of the preamble sequence set carried in the first message, and randomly selects a preamble sequence in the preamble sequence set as the preamble sequence of the first access signal.

As yet another example, after receiving the first message, the second node determines the subchannel set according to the configuration parameter of the subchannel set carried in the first message, and randomly selects a subchannel in the subchannel set as the subchannel for transmitting the first access signal.

Thus, when the second node sends the first access signal, not only a time slot within the first time slot range may be selected as the time slot for sending the first access signal, but also a preamble sequence in the preamble sequence set may be selected as the preamble sequence of the first access signal and/or a subchannel in the subchannel set may be selected as the subchannel for transmitting the first access signal, thereby reducing the collision probability of the first access signals of multiple second nodes in multiple aspects such as time domain, frequency domain, and code domain, so as to improve the access efficiency of the second nodes.

As yet another example, the first indication information is used to indicate a second node type. After the second node receives the first indication information, the second node sends the first access signal if the type of the second node belongs to the second node type indicated by the first indication information. In some examples, the second node determines the preamble sequence set according to the second node type, and selects a preamble sequence in the preamble sequence set as the first preamble sequence of the first access signal; or, the second node determines the subchannel set according to the second node type, and selects a subchannel in the subchannel set to transmit the first access signal.

As yet another example, the second indication information is used to indicate an access signal type, and the access signal types include a backscatter signal and an independently generated signal. After the second node receives the second indication information, the second node sends the first access signal if the access signal type of the second node belongs to the access signal type indicated by the second indication information. In some examples, the second node determines the preamble sequence set according to the access signal type, and selects a preamble sequence in the preamble sequence set as the first preamble sequence of the first access signal; or, the second node determines the subchannel set according to the access signal type, and selects a subchannel in the subchannel set to transmit the first access signal.

As yet another example, the third indication information is used to indicate an access mode, and the access modes include a first backscatter access mode, a second backscatter access mode, and an active communication access mode. For example, the first backscatter access mode includes a periodic backscatter access mode, and the second backscatter access mode includes an aperiodic backscatter access mode. Access modes supported by second nodes of different second node types may be the same or different. After the second node receives the third indication information, he second node sends the first access signal if the access mode of the second node belongs to the access mode indicated by the third indication information. In some examples, the second node determines the preamble sequence set according to the access mode, and selects a preamble sequence in the preamble sequence set as the first preamble sequence of the first access signal; or, the second node determines the subchannel set according to the access mode, and selects a subchannel in the subchannel set to transmit the first access signal.

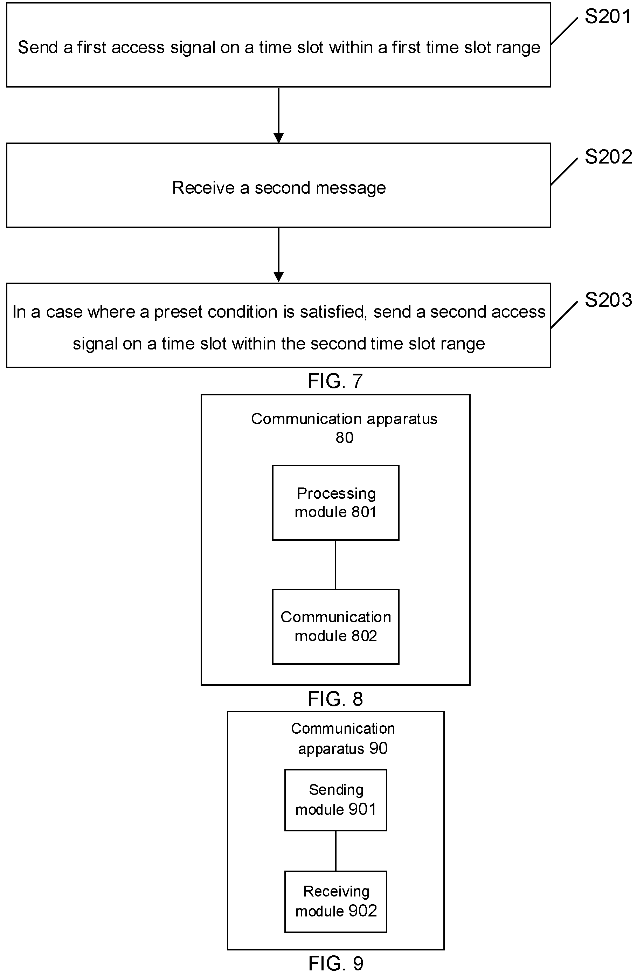

In some embodiments, in a case where the first access signals of the second nodes collide, the second nodes need to re-send access signals, so that the first node can correctly decode the data information in the access signals. As shown in FIG. 7, the above process may be implemented as the following steps S202:

S202: a second message is receive d.

In some embodiments, the second message is used to trigger a second node that sent a first access signal on a time slot to send a second access signal.

In some embodiments, the second message includes at least one of: a configuration parameter of a second time slot range, fourth indication information, fifth indication information, and sixth indication information; the fourth indication information is used to indicate at least one first preamble sequence among the first preamble sequences respectively contained in N first access signals detected by the first node on a time slot within the first time slot range; the fifth indication information is used to indicate at least one subchannel among the subchannels respectively used by the above N first access signals; the sixth indication information is used to indicate that the first node has detected the first preamble sequence.

The fourth indication information includes a first bitmap, and the first bitmap includes K indication bits. Each indication bit of the K indication bits corresponds to one preamble sequence in the preamble sequence set, and a value of the indication bit is used to indicate whether the preamble sequence corresponding to the indication bit is the first preamble sequence indicated by the fourth indication information, where K is a number of preamble sequences contained in the preamble sequence set, and K is a positive integer. Alternatively, the fourth indication information includes at least one first indication field, and each first indication field is used to indicate one first preamble sequence.

The fifth indication information includes a second bitmap, and the second bitmap includes P indication bits. Each indication bit of the P indication bits corresponds to one subchannel in the subchannel set; and a value of the indication bit is used to indicate whether the subchannel corresponding to the indication bit is the subchannel indicated by the fifth indication information, where P a the number of subchannels included in the subchannel set, and P is a positive integer. Alternatively, the fifth indication information includes at least one second indication field, and each second indication field is used to indicate one subchannel.

S203: in a case where a preset condition is satisfied, a second access signal is sent on a time slot within the second time slot range.

As an implementation, in a case where the second message satisfies the preset condition, it is determined to send the second access signal.

The preset condition includes any one of:
after sending the first access signal on a time slot within the first time slot range, the second message is received on the time slot, and the at least one first preamble sequence indicated by the fourth indication information carried in the second message includes the first preamble sequence of the first access signal; after sending the first access signal on a time slot within the first time slot range, the second message is received on the time slot, and the at least one subchannel indicated by the fifth indication information carried in the second message includes the subchannel for transmitting the first access signal; or after sending the first access signal on a time slot within the first time slot range, the second message is received on the time slot, and the second message carries the sixth indication information.

Exemplarily, in a case where the preset condition is satisfied, the second node sends the second access signal on a time slot within the second time slot range, including at least the following three situations:
Situation 1: after the second node sends the first access signal on a time slot within the first time slot range, if the second message is received on the time slot, and the first preamble sequence indicated by the fourth indication information carried in the second message includes the first preamble sequence of the first access signal sent by the second node, the second access signal is sent on a time slot within the second time slot range.

Situation 2: after the second node sends the first access signal on a time slot within the first time slot range, if the second message is received on the time slot, and the subchannel indicated by the fifth indication information carried in the second message includes the subchannel for transmitting the first access signal by the second node, the second access signal is sent on a time slot within the second time slot range.

Situation 3: after the second node sends the first access signal on a time slot within the first time slot range, if the second message is received on the time slot, and the second message carries the sixth indication information, the second access signal is sent on a time slot within the second time slot range.

As another implementation, in a case where the second message indicates to send the second access signal, it is determined to send the second access signal.

Exemplarily, the second message may directly indicate whether to send the second access signal. In a case where the second message directly indicates whether to send the second access signal, the second node may directly determine whether to send the second access signal according to the indication content of the second message.

The second access signal includes a second preamble sequence and second data information.

In some embodiments, the second time slot range is determined based on the configuration parameter of the second time slot range; or, the second time slot range is predefined; or, the second time slot range is the same as the first time slot range.

Exemplarily, the second time slot range may be predefined. For example, the second time slot range may be a fixed time slot range corresponding to the second message. Alternatively, the second time slot range is determined based on the configuration parameter of the second time slot range carried in the second message; or, the second time slot range is the same as the first time slot range.

In some embodiments, the second preamble sequence is a fixed preamble sequence in the above preamble sequence set, for example, the first preamble sequence in the preamble sequence set; or, the second preamble sequence is the first first preamble sequence indicated by the fourth indication information, and in a case where the fourth indication information indicates a single first preamble sequence, the second preamble sequence is the first preamble sequence in the fourth indication information; or, the second preamble sequence is a preamble sequence randomly selected from the above preamble sequence set; or, the second preamble sequence in the second access signal is the same as the first preamble sequence in the first access signal sent from the same second node.

In some embodiments, the subchannel for transmitting a second access signal is a subchannel randomly selected from the subchannel set; or, the subchannel for transmitting a second access signal is a fixed subchannel in the subchannel set, e.g. the first subchannel in the subchannel set; or, the subchannel for transmitting a second access signal is the first subchannel indicated by the fifth indication information carried in the second message; or, the subchannel for transmitting a second access signal is the same as the subchannel for transmitting the first access signal sent from the same second node.

In this way, in a case where the first node fails to successfully decode the data information of the first access signals due to time slot collision, the second nodes continue to send second access signals, so that the first node continues to decode the second access signals, thereby improving the access efficiency and success rate of the second nodes.

As an implementation, the second node sends the second access signal based on the second message.

Exemplarily, the second node determines the second time slot range based on the configuration parameter of the second time slot range carried in the second message, and randomly selects a time slot within the second time slot range to send the second access signal. The second node determines the second preamble sequence of the second access signal based on the fourth indication information carried in the second message. The second node determines the subchannel for transmitting the second access signal based on the fifth indication information carried in the second message.

In some embodiments, the above method further includes: receiving access confirmation information.

The access confirmation information is used to indicate that the first node has received the first access signal or the second access signal. The access confirmation information includes the data information in the corresponding first access signal or second access signal, or a message (Message2). The Message2 includes basic information, network configuration information, etc., of the first node.

In some embodiments, in a case where the second node receives the access confirmation information, the second node sends a physical uplink channel signal.

The physical uplink channel signal includes a third preamble sequence and physical uplink channel data, where the preamble sequence is located before the physical uplink channel data. The third preamble sequence is a fixed preamble sequence. Alternatively, the third preamble sequence is a preamble sequence selected by the second node from the preamble sequence set. Exemplarily, the preamble sequence set used by the third preamble sequence is different from the preamble sequence set used by the first preamble sequence or the second preamble sequence. Alternatively, the third preamble sequence is a preamble sequence determined based on a cell identity (D) corresponding to the second node. Alternatively, the third preamble sequence is a preamble sequence directly indicated by the first node.

It can be understood that, in order to implement the above functions, the communication apparatus includes corresponding hardware structures and/or software modules for executing each function. A person skilled in the art should easily realize that, in combination with the algorithm steps of the examples described in the embodiments of the present disclosure, the present disclosure can be implemented in a form of hardware or a combination of hardware and computer software. Whether a certain function is executed in a manner of hardware or computer software driving hardware depends on the specific application and design constraint conditions of the technical solution. Professional technicians may use different methods to implement the described functions for each specific application, but such implementation should not be considered as going beyond the scope of the present disclosure.

In the embodiments of the present disclosure, functional modules of the communication apparatus may be divided according to the above method embodiments. For example, each functional module may be divided corresponding to each function, or two or more functions may be integrated into one functional module. The above integrated modules may be implemented either in a form of hardware or in a form of software. It should be noted that the division of modules in the embodiments of the present disclosure is schematic and is merely a kind of logical function division, and there may be other division methods in actual implementation. The following description is made by taking an example where each functional module is divided corresponding to each function.

FIG. 8 is a schematic structural diagram of a communication apparatus applied to a first node provided by the embodiments of the present disclosure. The communication apparatus 80 can execute the signal detection method provided in the above method embodiments. As shown in FIG. 8, the communication apparatus 80 includes a processing module 801.

The processing module 801 is configured to detect, based on a preamble sequence set and/or a subchannel set, a first access signal within a first time slot range, where the first access signal includes a first preamble sequence and first data information.

In some embodiments, the preamble sequence set is predefined; or, the preamble sequence set is determined based on a configuration parameter of the preamble sequence set.

In some embodiments, the configuration parameter of the preamble sequence set includes at least one of: a cyclic shift value, a preamble sequence index, a number of preamble sequences, a preamble sequence length, a preamble sequence set index.

In some embodiments, in a case where the configuration parameter of the preamble sequence set indicates that the cyclic shift value is L, the preamble sequence set includes K preamble sequences with cyclic shift values from L to L+K-1 respectively; or, in a case where the configuration parameter of the preamble sequence set indicates that the preamble sequence index is L, the preamble sequence set includes K preamble sequences with preamble sequence indices from L to L+K-1 respectively; L and K are both positive integers, where K is a number of preamble sequences contained in the preamble sequence set.

In some embodiments, the preamble sequence set being predefined includes that: the preamble sequence set is determined according to a second node type.

In some embodiments, each second node type corresponds to a preamble sequence set.

In some embodiments, the above communication apparatus 80 further includes a communication module 802, configured to send a first message, where the first message includes at least one of: a configuration parameter of the first time slot range, a configuration parameter of the preamble sequence set, a configuration parameter of the subchannel set, first indication information, second indication information, and third indication information; the first indication information is used to indicate a second node type; the second indication information is used to indicate an access signal type; and the third indication information is used to indicate an access mode.

In some embodiments, the communication module 802 is further configured to: in a case where N first access signals are detected on a time slot within the first time slot range, send a second message on the time slot, where N is a positive integer.

In some embodiments, the second message is used to trigger a second node that sends a first access signal on the time slot to send a second access signal.

In some embodiments, the second message includes at least one of: a configuration parameter of a second time slot range, fourth indication information, fifth indication information, and sixth indication information; the fourth indication information is used to indicate at least one first preamble sequence among first preamble sequences respectively contained in the N first access signals; the fifth indication information is used to indicate at least one subchannel among subchannels respectively used by the N first access signals; the sixth indication information is used to indicate that the first node has detected the first preamble sequence, and N is a positive integer.

In some embodiments, the fourth indication information includes a first bitmap, and the first bitmap includes K indication bits. Each indication bit of the K indication bits corresponds to a preamble sequence in the preamble sequence set, and a value of an indication bit is used to indicate whether the preamble sequence corresponding to the indication bit is the first preamble sequence indicated by the first indication information, where K is a number of preamble sequences included in the preamble sequence set, and K is a positive integer.

In some embodiments, the fourth indication information includes at least one first indication field, and each first indication field is used to indicate one first preamble sequence indicated by the fourth indication information.

In some embodiments, the fifth indication information includes a second bitmap, and the second bitmap includes P indication bits. Each indication bit of the P indication bits corresponds to one subchannel in the subchannel set; and a value of the indication bit is used to indicate whether the subchannel corresponding to the indication bit is the subchannel indicated by the fifth indication information, where P is a number of subchannels included in the subchannel set, and P is a positive integer.

In some embodiments, the fifth indication information includes at least one second indication field, and each second indication field is used to indicate one subchannel indicated by the fifth indication information.

In some embodiments, the processing module 801 is further configured to detect second access signals within the second time slot range, where a second access signal includes a second preamble sequence and second data information.

In some embodiments, the second time slot range is determined based on the configuration parameter of the second time slot range; or, the second time slot range is predefined; or, the second time slot range is the same as the first time slot range.

In some embodiments, the above processing module 801 is configured to: based on the preamble sequence set or the at least one first preamble sequence indicated by the fourth indication information, detect the second access signals within the second time slot range.

In some embodiments, the above processing module 801 is configured to: based on the subchannel set or the at least one subchannel indicated by the fifth indication information, detect the second access signals within the second time slot range.

FIG. 9 is a schematic structural diagram of a communication apparatus applied to a second node provided by the embodiments of the present disclosure. The communication apparatus 90 can execute the signal sending method provided in the above method embodiments. As shown in FIG. 9, the communication apparatus 90 includes a sending module 901.

The sending module 901 is configured to send a first access signal on a time slot within a first time slot range, where the first access signal includes a first preamble sequence and first data information; the first access signal satisfies at least one condition that: the first preamble sequence in the first access signal is a preamble sequence in a preamble sequence set; and a subchannel for transmitting the first access signal is a subchannel in a subchannel set.

In some embodiments, the above communication apparatus 90 further includes a receiving module 902, configured to receive a first message, where the first message includes at least one of: a configuration parameter of the first time slot range, a configuration parameter of the preamble sequence set, a configuration parameter of the subchannel set, first indication information, second indication information, and third indication information; the first indication information is used to indicate a second node type; the second indication information is used to indicate an access signal type; and the third indication information is used to indicate an access mode.

In some embodiments, the receiving module 902 is configured to receive a second message, where the second message includes at least one of: a configuration parameter of a second time slot range, fourth indication information, fifth indication information, and sixth indication information; the fourth indication information is used to indicate at least one first preamble sequence among the first preamble sequences respectively contained in N first access signals detected by the first node on a time slot within the first time slot range; the fifth indication information is used to indicate at least one subchannel among the subchannels respectively used by the N first access signals; the sixth indication information is used to indicate the first preamble sequence detected by the first node.

In some embodiments, the sending module 901 is configured to: in a case where a preset condition is satisfied, send a second access signal on a time slot within the second time slot range; the second access signal includes a second preamble sequence and second data information; the preset condition includes any one of: after sending the first access signal on a time slot within the first time slot range, the second message is received on the time slot, and the at least one first preamble sequence indicated by the fourth indication information carried in the second message includes the first preamble sequence of the first access signal; after sending the first access signal on a time slot within the first time slot range, the second message is received on the time slot, and the at least one subchannel indicated by the fifth indication information carried in the second message includes the subchannel for transmitting the first access signal; or after sending the first access signal on a time slot within the first time slot range, the second message is received on the time slot, and the second message carries the sixth indication information.

In some embodiments, the second preamble sequence is the first first preamble sequence among the at least one first preamble sequence indicated by the fourth indication information; or, the second preamble sequence in the second access signal is the same as the first preamble sequence in the first access signal sent from the same second node; or, the second preamble sequence is a preamble sequence randomly selected from the preamble sequence set; or, the second preamble sequence is a fixed preamble sequence in the preamble sequence set.

In some embodiments, the subchannel for transmitting the second access signal is the same as the subchannel used for transmitting the first access signal by the same second node; or, the subchannel for transmitting the second access signal is the first subchannel among the at least one subchannel indicated by the fifth indication information; or, the subchannel for transmitting the second access signal is the first subchannel in the subchannel set; or, the subchannel for transmitting the second access signal is a subchannel randomly selected by the second node in the subchannel set.

In some embodiments, the second time slot range is determined based on the configuration parameter of the second time slot range; or, the second time slot range is predefined; or, the second time slot range is the same as the first time slot range.

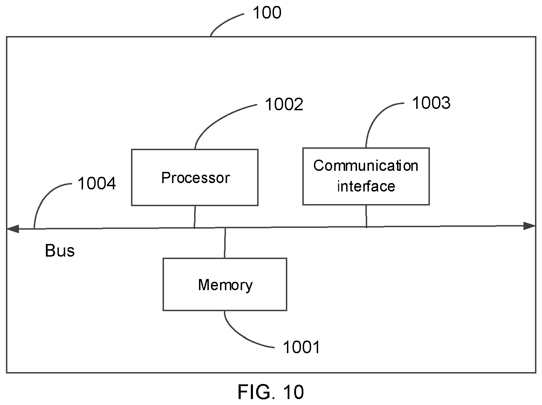

In a case where the functions of the above integrated modules are implemented in a form of hardware, the embodiments of the present disclosure provides another structure of the communication apparatus involved in the above embodiments. As shown in FIG. 10, the communication apparatus 100 includes: a processor 1002 and a bus 1004. In some embodiments, the communication apparatus may further include a memory 1001; in some embodiments, the communication apparatus 100 may further include a communication interface 1003.

The processor 1002 may implement or execute various exemplary logic blocks, modules, and circuits described in conjunction with the embodiments of the present disclosure. The processor 1002 may be a central processing unit, a general-purpose processor, a digital signal processor, an application specific integrated circuit, a field programmable gate array or other programmable logic devices, a transistor logic device, a hardware component, or any combination thereof. The processor 1002 may implement or execute various exemplary logic blocks, modules, and circuits described in conjunction with the embodiments of the present disclosure. The processor 1002 may also be a combination implementing computing functions, for example, a combination including one or more microprocessors, a combination of a DSP and a microprocessor, etc.

The communication interface 1003 is configured to connect to other devices through a communication network. The communication network may be Ethernet, a radio access network, a wireless local area network (WLAN), etc.

The memory 1001 may be a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of carrying or storing desired program code in a form of instructions or data structures and accessible by a computer, but is not limited thereto.

As an implementation, the memory 1001 may exist independently of the processor 1002, and the memory 1001 may be connected to the processor 1002 through the bus 1004 for storing instructions or program codes. When the processor 1002 calls and executes the instructions or program codes stored in the memory 1001, the processor can implement the signal detection method or the signal sending method provided in the embodiments of the present disclosure.

In another implementation, the memory 1001 may also be integrated with the processor 1002.

The bus 1004 may be an extended industry standard architecture (EISA) bus or the like. The bus 1004 may be classified into an address bus, a data bus, a control bus, etc. For ease of representation, only one thick line is used to represent it in FIG. 10, but it does not mean that there is only one bus or one type of bus.

Some embodiments of the present disclosure provide a computer-readable storage medium (e.g., a non-transitory computer-readable storage medium), in which computer program instructions are stored, and when the computer program instructions run on a computer, the computer executes the signal detection method or the signal sending method according to any one of the above embodiments.

Exemplarily, the above computer-readable storage medium may include, but is not limited to: magnetic storage devices (e.g.,, hard disks, floppy disks, or magnetic tapes, etc.), optical disks (e.g.,, Compact Disks (CD), Digital Versatile Disks (DVD), etc.), smart cards, and flash memory devices (e.g.,, Erasable Programmable Read-Only Memory (EPROM), cards, sticks, or key drives, etc.). Various computer-readable storage media described in the present disclosure may represent one or more devices and/or other machine-readable storage media for storing information. The term "machine-readable storage medium" may include, but is not limited to, wireless channels and various other media capable of storing, containing, and/or carrying instructions and/or data.

The embodiments of the present disclosure provides a computer program product including instructions, and when the computer program product runs on a computer, the computer executes the signal detection method or the signal sending method described in any one of the above embodiments.

The above descriptions are only specific implementations of the present disclosure, but the protection scope of the present disclosure is not limited thereto. Any variation or replacement within the technical scope disclosed in the present disclosure shall be covered within the protection scope of the present disclosure. Therefore, the protection scope of the present disclosure shall be subject to the protection scope of the claims.

## Claims

1. A signal detection method, wherein the method is applied to a first node and comprises:
detecting, based on a preamble sequence set and/or a subchannel set, a first access signal within a first time slot range, wherein the first access signal comprises a first preamble sequence and first data information.

2. The method according to claim 1, wherein the preamble sequence set is predefined; or, the preamble sequence set is determined based on a configuration parameter of the preamble sequence set.

3. The method according to claim 2, wherein the configuration parameter of the preamble sequence set comprises at least one of: a cyclic shift value, a preamble sequence index, a number of preamble sequences, a preamble sequence length, a preamble sequence set index.

4. The method according to claim 3, wherein,
in a case where the configuration parameter of the preamble sequence set indicates that the cyclic shift value is L, the preamble sequence set comprises K preamble sequences with cyclic shift values from L to L+K-1 respectively; or,
in a case where the configuration parameter of the preamble sequence set indicates that the preamble sequence index is L, the preamble sequence set comprises K preamble sequences with preamble sequence indices from L to L+K-1 respectively;
wherein L and K are both positive integers, and K is a number of preamble sequences contained in the preamble sequence set.

5. The method according to claim 2, wherein the preamble sequence set being predefined, comprises that: the preamble sequence set is determined according to a second node type.

6. The method according to claim 5, wherein each second node type corresponds to a preamble sequence set.

7. The method according to claim 1, wherein, before detecting the first access signal within the first time slot range, the method further comprises:
sending a first message, wherein the first message comprises at least one of: a configuration parameter of the first time slot range, a configuration parameter of the preamble sequence set, a configuration parameter of the subchannel set, first indication information, second indication information, and third indication information; wherein the first indication information is used to indicate a second node type; the second indication information is used to indicate an access signal type; and the third indication information is used to indicate an access mode.

8. The method according to claim 1, further comprising:
in a case where N first access signals are detected on a time slot within the first time slot range, sending a second message on the time slot, wherein N is a positive integer .

9. The method according to claim 8, wherein the second message is used to trigger a second node that sends the first access signal on the time slot to send a second access signal.

10. The method according to claim 8, wherein the second message comprises at least one of: a configuration parameter of a second time slot range, fourth indication information, fifth indication information, sixth indication information; wherein the fourth indication information is used to indicate at least one first preamble sequence among first preamble sequences respectively contained in the N first access signals; the fifth indication information is used to indicate at least one subchannel among subchannels respectively used by the N first access signals; the sixth indication information is used to indicate that the first node has detected the first preamble sequence, and N is a positive integer.

11. The method according to claim 10, wherein the fourth indication information comprises a first bitmap, the first bitmap comprises K indication bits, each indication bit of the K indication bits corresponds to a preamble sequence in the preamble sequence set, a value of an indication bit is used to indicate whether the preamble sequence corresponding to the indication bit is a first preamble sequence indicated by the fourth indication information, K is a number of preamble sequences contained in the preamble sequence set, and K is a positive integer.

12. The method according to claim 10, wherein the fourth indication information comprises at least one first indication field, and each first indication field of the at least one first indication field is used to indicate a first preamble sequence.

13. The method according to claim 10, wherein the fifth indication information comprises a second bitmap, the second bitmap comprises P indication bits, each indication bit of the P indication bits corresponds to a subchannel in the subchannel set;
and a value of an indication bit is used to indicate whether the subchannel corresponding to the indication bit is a subchannel indicated by the fifth indication information, P is a number of subchannels contained in the subchannel set, and P is a positive integer.

14. The method according to claim 10, wherein the fifth indication information comprises at least one second indication field, and each second indication field of the at least one second indication field is used to indicate one subchannel.

15. The method according to claim 9, further comprising:
detecting a second access signal within a second time slot range, wherein the second access signal comprises a second preamble sequence and second data information.

16. The method according to claim 15, wherein the second time slot range is determined based on the configuration parameter of the second time slot range; or, the second time slot range is predefined; or, the second time slot range is the same as the first time slot range.

17. The method according to claim 15, wherein detecting the second access signal within the second time slot range comprises:
detecting, based on the preamble sequence set or the at least one first preamble sequence indicated by the fourth indication information, the second access signal within the second time slot range.

18. The method according to claim 16, wherein detecting the second access signal within the second time slot range comprises:
detecting, based on the subchannel set or the at least one subchannel indicated by the fifth indication information, the second access signal within the second time slot range.

19. A signal sending method, wherein the method is applied to a second node and comprises:
sending a first access signal on a time slot within a first time slot range, wherein the first access signal comprises a first preamble sequence and first data information; wherein the first access signal satisfies at least one condition that:
the first preamble sequence in the first access signal is a preamble sequence in a preamble sequence set;
a subchannel for transmitting the first access signal is a subchannel in a subchannel set.

20. The method according to claim 19, wherein, before sending the first access signal on the time slot within the first time slot range, the method further comprises:
receiving a first message, wherein the first message comprises at least one of: a configuration parameter of the first time slot range, a configuration parameter of the preamble sequence set, a configuration parameter of the subchannel set, first indication information, second indication information, and third indication information; wherein the first indication information is used to indicate a second node type; the second indication information is used to indicate an access signal type; and the third indication information is used to indicate an access mode.

21. The method according to claim 19, further comprising:
receiving a second message, wherein the second message comprises at least one of: a configuration parameter of a second time slot range, fourth indication information, fifth indication information, sixth indication information; wherein the fourth indication information is used to indicate at least one first preamble sequence among first preamble sequences respectively contained in N first access signals detected by a first node on a time slot within the first time slot range; the fifth indication information is used to indicate at least one subchannel among subchannels respectively used by the N first access signals; and the sixth indication information is used to indicate that the first node has detected the first preamble sequence.

22. The method according to claim 21, further comprising:
in a case where a preset condition is satisfied, sending a second access signal on a time slot within the second time slot range; wherein the second access signal comprises a second preamble sequence and second data information; and the preset condition comprises any one of:
after sending the first access signal on a time slot within the first time slot range, the second message is received on the time slot, and the at least one first preamble sequence indicated by the fourth indication information carried in the second message comprises the first preamble sequence of the first access signal;
after sending the first access signal on a time slot within the first time slot range, the second message is received on the time slot, and the at least one subchannel indicated by the fifth indication information carried in the second message comprises the subchannel for transmitting the first access signal; or
after sending the first access signal on a time slot within the first time slot range, the second message is received on the time slot, and the second message carries the sixth indication information.

23. The method according to claim 22, wherein,
the second preamble sequence is a first first preamble sequence of the at least one first preamble sequence indicated by the fourth indication information; or,
the second preamble sequence in the second access signal is the same as a first preamble sequence in a first access signal sent from a same second node; or,
the second preamble sequence is a preamble sequence randomly selected from the preamble sequence set; or,
the second preamble sequence is a fixed preamble sequence in the preamble sequence set.

24. The method according to claim 22, wherein,
a subchannel for transmitting the second access signal is the same as a subchannel used for transmitting a first access signal by a same second node; or,
the subchannel for transmitting the second access signal is a first subchannel among the at least one subchannel indicated by the fifth indication information; or,
the subchannel for transmitting the second access signal is a first subchannel in the subchannel set; or,
the subchannel for transmitting the second access signal is a subchannel randomly selected by the second node in the subchannel set.

25. The method according to claim 22, wherein the second time slot range is determined based on the configuration parameter of the second time slot range; or, the second time slot range is predefined; or, the second time slot range is the same as the first time slot range.

26. A communication apparatus, comprising a processor, wherein the processor, upon executing a computer program, implements the signal detection method according to any one of claims 1 to 18, or implements the signal sending method according to any one of claims 19 to 25.

27. A computer-readable storage medium, wherein the computer-readable storage medium comprises computer instructions; wherein, in a case where the computer instructions are executed, the signal detection method according to any one of claims 1 to 18 is implemented, or the signal sending method according to any one of claims 19 to 25 is implemented.
